# EUROPÄISCHE PATENTSCHRIFT

(11) **EP 1 747 809 B1**
(45) Veröffentlichungstag und Bekanntmachung des Hinweises auf die Patenterteilung: **09.04.2008**
(21) Anmeldenummer: 06405281.4
(22) Anmeldetag: 30.06.2006
(51) Int. Cl.: B01D 3/16, F16K 15/02

(54) **Bodenventil für eine Bodenkolonne**
Valve for a plate column
Soupape pour une colonne à plateaux

(30) Priorität: 29.07.2005 EP 05405459
(43) Veröffentlichungstag der Anmeldung: 31.01.2007
(73) Patentinhaber: Sulzer Chemtech AG, 8404 Winterthur (CH)
(72) Erfinder: Fischer, Markus, 78462 Konstanz (DE); Bobrowski, Ireneusz, 61-235 Poznan (PL); Curti, Vincenzo, 04100 Latina (IT); Fehr, Emil, 8415 Berg am Irchel (CH)
(74) Vertreter: Sulzer Management AG

(56) Entgegenhaltungen:
- FR-A- 1 361 579
- GB-A- 1 018 924
- US-A- 4 344 900
- US-A1- 2002 163 091

## Beschreibung

Die Erfindung betrifft ein Bodenventil für eine Bodenkolonne gemäss dem Oberbegriff von Anspruch 1. In einer Bodenkolonne wird auf Böden der Kolonne eine gasförmige Phase (Dampf) mit einer flüssigen Phase in Kontakt gebracht. Das Bodenventil einer solchen Bodenkolonne erlaubt mit einem beweglichen Ventilkörper einen variablen Dampfdurchtritt durch eine Bodenöffnung. Die Erfindung bezieht sich auch auf ein Verfahren zum Einsetzen des Ventilkörpers in die Bodenöffnung.

Aus der GB-A- 1,018,924 ist ein Bodenventil für eine kreisförmige Bodenöffnung bekannt. Der Ventilkörper dieses Bodenventils umfasst eine Mehrzahl von Leitschenkeln, die am Rand einer kreisförmigen Deckplatte und senkrecht zur Platte angebracht sind. An den Leitschenkeln sind Widerhaken zum Verankern des Ventilkörpers angeordnet. Der Ventilkörper lässt sich von Hand in die Bodenöffnung einsetzen, wobei sich die Leitschenkel und/oder Widerhaken elastisch verformen. Je nach Material kann eine plastische Verformung entstehen, die nach dem Einsetzen des Ventilkörpers mit einer zusätzlichen Operation rückgängig gemacht werden muss. Ein Nachteil dieser Ventilkonstruktion besteht darin, dass sich die Leitschenkel leicht verformen lassen. Im Betrieb der Kolonne werden die Leitschenkel mechanisch so beansprucht, dass Bodenventile aufgrund einer Deformierung der Leitschenkel ihre Ventilkörper verlieren können.

Ein Bodenventil mit zwei Leitschenkeln ist aus der US-A- 3,770,255 bekannt. Die Leitschenkel sind diametral zu einander an zwei parallelen Seiten einer trapezförmigen Deckplatte angebracht. Das Trapez hat angenähert die Form eines länglichen Rechtecks, an dessen kurzen Seiten die Leitschenkel angeordnet sind. Die Leitschenkel gehen an ihren unteren Enden in abgewinkelte, nach aussen gerichtete Flächen über, die parallel zur Deckplatte sind und als Widerhaken dienen. Das Einsetzen des Ventilkörpers macht eine Operation erforderlich, bei der die Leitschenkel unter Verwendung eines Instruments nach Innen gebogen werden, so dass die Widerhaken in die Bodenöffnung eingeführt werden können. Bei dieser Operation entstehen plastische Verformungen an den Leitschenkeln und/oder Widerhaken, die nach dem Einsetzen mit einer zusätzlichen Operation zumindest teilweise wieder rückgängig gemacht werden müssen.

Ähnlich erfolgt die Einsetzoperation bei einem weit verbreiteten runden Ventil mit drei Leitschenkeln. Beispiele weiterer Bodenventile sind z.B. in H. Z. Kister, "Distillation Design", McGraw-Hill, Inc. 1992, Seiten 253 ff dargestellt.

Aufgabe der Erfindung ist es, ein Bodenventil zu schaffen, bei dem eine Einsetzoperation einfacher und mit weniger Komplikationen durchführbar ist. Diese Aufgabe wird durch das im Anspruch 1 definierte Bodenventil gelöst.

Das Bodenventil für eine Bodenkolonne umfasst eine Öffnung in einem Boden für einen Dampfdurchtritt und einen Ventilkörper, der zum Rand der Bodenöffnung passend ausgebildet ist. Der Ventilkörper besteht aus einer Deckplatte und am Rand dieser Platte angeordneten, vertikal nach unten gerichteten Leitschenkeln. Die Leitschenkel weisen Widerhaken zum Verankern des Ventilkörpers am Öffnungsrand auf. Der Plattenrand, gegebenenfalls mit Ausnahme von noppenartigen, nach unten gerichtete Erhebungen, liegt auf einer Ebene, der Plattenebene. Die äusseren Oberflächen der Leitschenkel enthalten jeweils einen Hubbereich, der senkrecht zur Plattenebene steht. Für den Ventilkörper sind hinsichtlich dessen Einsetzen in die Bodenöffnung Werkstoff sowie Formgebung so gewählt, dass sich beim Einsetzen eine elastische und gegebenenfalls teilweise plastische Verformung des Ventilkörpers ergibt, die weitgehend auf die Deckplatte in Form einer Aufwölbung beschränkt ist. Eine etwaige Deformation lässt sich am eingesetzten Ventilkörper durch eine Kraftausübung auf die Deckplatte bis auf eine geringe Restverformung rückgängig machen. Auf der Deckplatte können Schwächungen, beispielsweise in Form von Nuten, Schlitzen oder Bohrungen, eingelassen sein, die ein Ausbilden der Aufwölbung erleichtern.

Die abhängigen Ansprüche 2 bis 6 betreffen vorteilhafte Ausführungsformen des erfindungsgemässen Bodenventils. Anspruch 7 bezieht sich auf eine Bodenkolonne mit erfindungsgemässen Bodenventilen. Verfahren zum Einsetzen von Ventilkörpern dieser Bodenventile in der Bodenkolonne sind Gegenstand der Ansprüche 8 bis 10.

Nachfolgend wird die Erfindung anhand der Zeichnungen erläutert. Es zeigen:
- Fig. 1: einen Ventilkörper des erfindungsgemässen Bodenventils und eine entsprechende Bodenöffnung für einen Dampfdurchtritt durch den Boden,
- Fig. 2: einen Längsschnitt durch das Bodenventil der Fig. 1, mit eingesetztem Ventilkörper,
- Fig. 3: ein geformtes Blechstück, aus dem der Ventilkörper der Fig. 1 durch Umformen herstellbar ist,
- Fig. 4: eine Darstellung zur Erläuterung von geometrischen Beziehungen zwischen Ventilkörper und Bodenöffnung,
- Fig. 5: ein geformtes Blechstück zu einer zweiten Ausführungsform,
- Fig. 6: einen Längsschnitt durch das Bodenventil gemäss der zweiten Ausführungsform,
- Fig. 7: eine kreisförmige Deckplatte zu einer dritten Ausführungsform,
- Fig. 8: eine Darstellung, wie der Ventilkörper der dritten Ausführungsform in die Bodenöffnung eingesetzt wird, und
- Fig. 9: einen Ausschnitt eines Leitschenkels mit einem durch Stanzen und Umformen erzeugten Widerhaken.

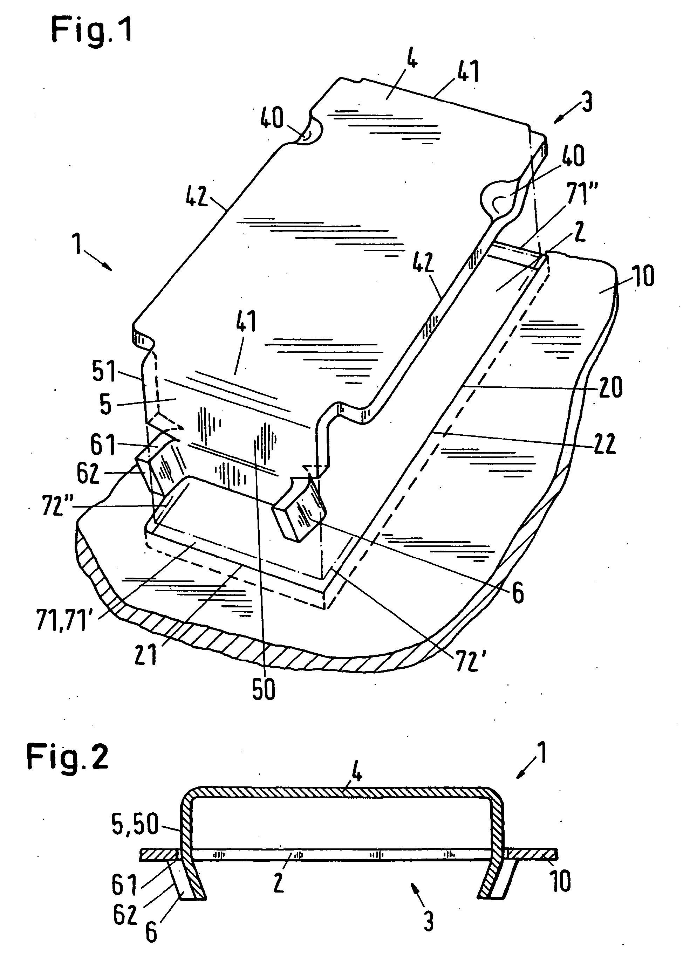

Eine erste Ausführungsform des erfindungsgemässen Bodenventils 1 mit einer Bodenöffnung 2 im Boden 10 und einem Ventilkörper 3 ist in den Figuren 1 und 2 dargestellt. Der Ventilkörper 3, der einen variablen Dampfdurchtritt durch die Bodenöffnung 2 erlaubt, ist separiert von dieser abgebildet. Die Fig. 2 zeigt einen Längsschnitt durch das Bodenventil 2 mit eingesetztem Ventilkörper 3. Der zu einem Öffnungsrand 20 passend ausgebildete Ventilkörper 3 umfasst eine Deckplatte 4 und zwei Leitschenkel 5, die am Rand dieser Platte 3 angeordnet und vertikal nach unten gerichtet sind. Der Öffnungsrand 20 hat eine Rechtecksform mit zwei kurzen Seiten 21 und zwei langen Seiten 22. Die Deckplatte 4 hat entsprechend vier gerade, auf einem Rechteck liegende Randseiten 41 bzw. 42, wobei die Seiten 41 Biegekanten sind und die Seiten 42 ausserhalb des Öffnungsrands 20 über den Boden 10 zu liegen kommen. Die Leitschenkel 5 weisen Widerhaken 6 auf, mit denen sich der Ventilkörper 3 am Öffnungsrand 20 verankern lässt, so dass der Hub begrenzt ist und der Ventilkörper 3 bei einem maximalen Dampfdurchtritt nicht aus der Bodenöffnung 2 gehoben werden kann. Die Deckplatte 4 hat an den langen Randseiten 42 noppenartige, nach unten gerichtete Erhebungen 40 (engl. "Dimples"), mit denen dafür gesorgt wird, dass das Bodenventil 1 immer einen minimalen Dampfdurchtritt ermöglicht. Der Plattenrand liegt - mit Ausnahme der noppenartigen Erhebungen - auf einer Ebene, die nachfolgend als Plattenebene bezeichnet wird. (Statt Erhebungen 40 an der Deckplatte 4 sind entsprechende, nach oben gerichtete Erhebungen oder "Dimples" auch im Boden 10 am Öffnungsrand 20 möglich.) Die äusseren Oberflächen der Leitschenkel 5 enthalten jeweils einen Hubbereich 50, der senkrecht zur Plattenebene steht. Die Widerhaken 6 sind an den zwei diametral zu einander stehenden Leitschenkeln 5 angeordnet.

Erfindungsgemäss sind hinsichtlich einem Einsetzen des Ventilkörpers 3 für diesen ein Werkstoff verwendet sowie eine Formgebung so gewählt, dass sich beim Einsetzen eine elastische und gegebenenfalls teilweise plastische Verformung des Ventilkörpers 3 ergibt, die weitgehend auf die Deckplatte 4 beschränkt ist. Die als Aufwölbung sichtbar Verformung tritt dort auf, wo sich durch das Zusammenspiel von Biegemoment und Widerstandsmoment - infolge der zum Einsetzen des Ventikörpers 3 notwendigen Krafteinwirkungen - eine maximale Biegespannung ergibt. Dieser Ort befindet sich beim erfindungsgemässen Bodenventil 1 auf der Deckplatte 4 des Ventilkörpers 3.

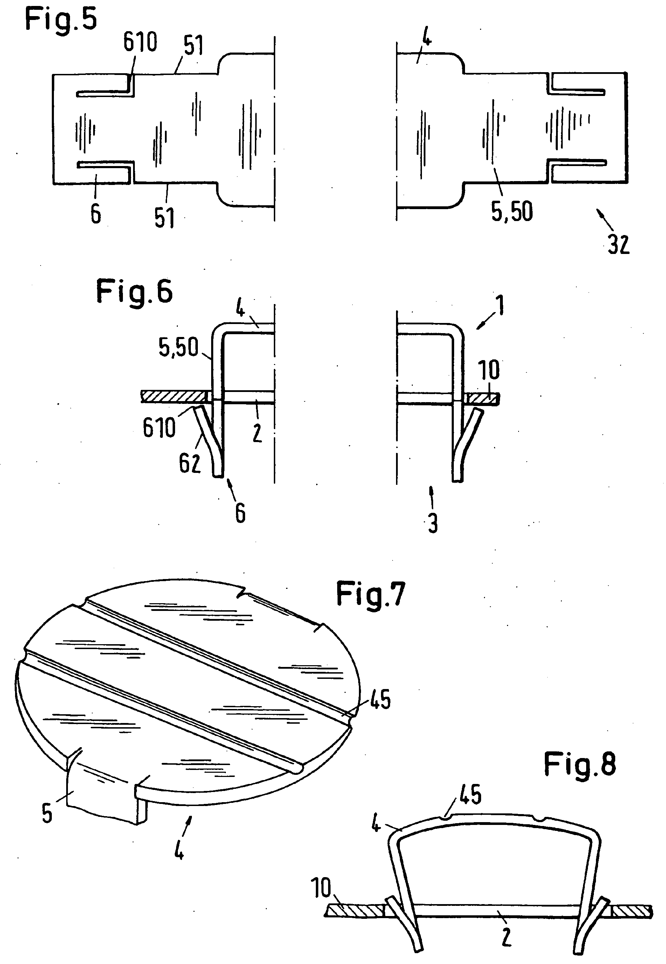

Falls nach dem Einsetzen eine plastische Verformung vorliegt, lässt sich diese am eingesetzten Ventilkörper 3 durch Ausüben einer Krafteinwirkung auf die Deckplatte 4 bis auf eine geringe Restverformung rückgängig machen. Die exzentrisch platzierten Erhebungen 40 erlauben zudem ein vorübergehendes Überbiegen in umgekehrter Richtung, so dass die ursprünglich vorgesehene Form praktisch ohne Spuren einer Restverformung erreichbar wird. Auf der Deckplatte 4 können Schwächungen, beispielsweise in Form von Nuten, Schlitzen oder Bohrungen, eingelassen sein, die das Widerstandsmoment lokal verkleinern und ein Ausbilden der Aufwölbung erleichtern (vgl. Fig. 7).

In der Regel ist der Abstand der Leitschenkel 5 verglichen mit deren vertikalen Längen relativ gross, so dass die genannte Verformung des Ventilkörpers 3 sich weitgehend auf die Deckplatte 4 beschränkt. Die Leitschenkel 5 und Widerhaken 6 bleiben beim Einsetzen praktisch unverformt.

Jeder Widerhaken 6 ist laschenartig ausgebildet. Er hat eine ebene obere Seitenfläche 61 (oder nur eine gerade Oberkante 610, siehe Fig. 6), die parallel zur Plattenebene liegt. Der Widerhaken 6 weist ausserdem eine überhängend geneigte äussere Seitenfläche 62 auf. Für diese Seitenfläche 62 - beginnend bei der Oberkante 610 und nach unten weiter gehend - nimmt der Abstand zu einer zentralen, senkrecht zur Plattenebene gerichteten Achse ab (nicht dargestellt). Dank der oberen Seitenfläche 61 (bzw. Oberkante 610) ergibt sich keine variable Schieflage des Ventilkörpers 3 beim maximalen Dampfdurchtritt durch das Bodenventil 1; der Hubbereich 50 ist somit gegen oben eindeutig begrenzt. Folglich stellt sich der maximale Wert des Dampfdurchtritts auf Grund der besonderen Ausbildung der Widerhaken 6 reproduzierbar ein. Es sind aus dem Stand der Technik Bodenventile mit Widerhaken bekannt, bei denen eine gebogene Fläche für die Hubbegrenzung eine solche Reproduzierbarkeit nicht zulässt.

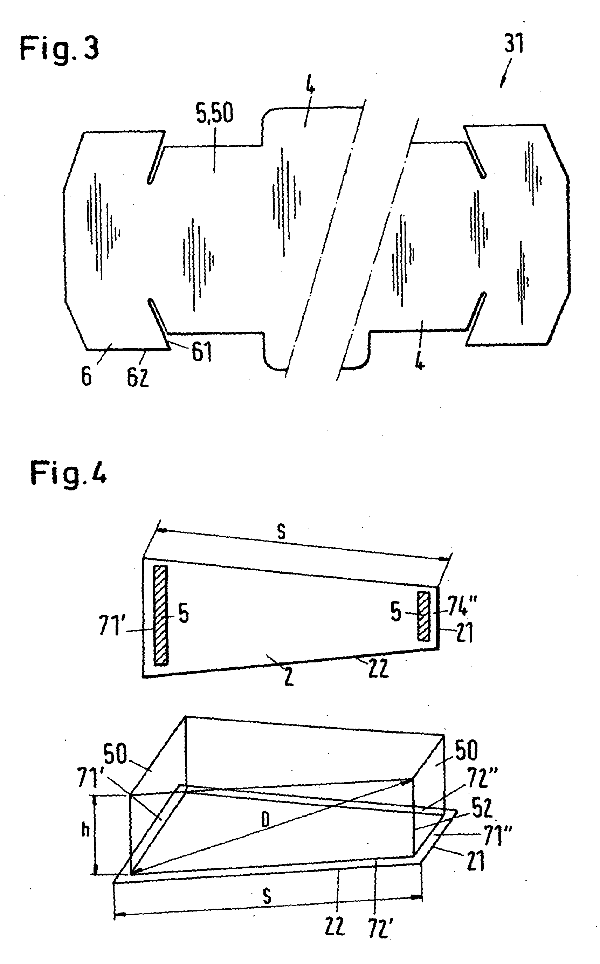

Der Ventilkörper 3 kann aus einem Blech durch Umformen hergestellt werden. Fig. 3 zeigt ein geformtes Blechstück 31, aus dem der Ventilkörper 3 der Fig. 1 durch weiteres Umformen herstellbar ist. Die Deckplatte 4, die Leitschenkel 5 sowie die Widerhaken 6 bilden Teile des zusammenhängenden Blechstücks 31. (Die Leitschenkel 5 und/oder die Widerhaken 6 könnten auch als separate Teile hergestellt sein, die zum Ventilkörper 3 zusammengefügt würden.) Das Umformen des Blechs erfolgt durch ein Stanzen oder ein Schneiden und umfasst ausserdem ein plastisches Umformen, insbesondere ein Biegen oder Prägen des Blechstücks.

Der Öffnungsrand 20 ist viereckig oder beispielsweise auch kreisförmig. Die Deckplatte 4 hat entsprechende Ränder, die auf einem Viereck bzw. Kreis liegen und die den Öffnungsrand 20 überragen. Vorzugsweise sind die Vierecke Rechtecke, siehe Fig. 1, oder Trapeze, siehe Fig. 4, mit angenähert der Form von Rechtecken. Die Fig. 4 zeigt eine Darstellung zur Erläuterung von geometrischen Beziehungen zwischen dem Ventilkörper 3 und der Bodenöffnung 2. Die Trapezform ist mit einer relativ starken Abweichung von der Rechtecksform etwas übertrieben gezeichnet. In der Fig. 4, oben, ist eine Draufsicht auf die Bodenöffnung 2 mit quergeschnittenen Leitschenkeln 5 dargestellt. Die Fig. 4, unten, zeigt ein Schrägbild mit der geometrischen Situation des Ventilkörpers 3 in der Region, die durch die Hubbereiche 50 mit den Kanten 51 aufgespannt wird.

Die Leitschenkel 5 sind parallel zu einander sowie zu den kurzen Vierecksseiten 21 ausgerichtet. Zwischen den Leitschenkeln 5 und den kurzen Öffnungsrändern 21 sind Spalten 71', 71" vorgesehen. Dank diesen Spalten 71', 71" kann der Ventilkörper sich nicht durch ein verkeilendes Verkanten am Öffnungsrand 20 festsetzen. Liegt der eine Leitschenkel 5 am Öffnungsrand 21 beim Spalt 71" an, so ist der andere Spalt 71' maximal geöffnet: Spalt 71. Bezüglich diesem maximalen Spalt 71 gilt, was anhand der Fig. 4 illustriert ist. Vertikale Kanten 51 der Leitschenkel 5 spannen über eine Höhe h der Hubbereiche 50 und senkrecht zu diesen zwei Rechtecke auf, deren grösste Diagonale D kürzer als die Länge S der entsprechenden Randseite 22 ist. (In Fig. 4 sind alle Diagonalen gleich lang; gleich D) Die Differenz zwischen der Länge S und der Diagonale D hat einen Wert, der grösser als 0.3 mm ist. Vorzugsweise beträgt diese Differenz rund 1 mm. An den langen Öffnungsrändern 22 sind ebenfalls Spalten 72', 72" vorgesehen, die jeweils ungefähr 0.25 bis 1.5 mm gross sind, vorzugsweise 0.5 mm.

Die Dicke der Deckplatte 4 oder des Blechstücks 31 hat einen Wert im Bereich von 0.5 bis 3 mm. Die Fläche der Öffnung 2 für den Dampfdurchtritt hat einen Wert im Bereich von 500 bis 2000 mm². Die Länge der Widerhaken 6 hat einen Wert im Bereich von 2 bis 10 mm. Die Höhe h der Hubbereiche ist grösser als 5 und kleiner als 20 mm und hat vorzugsweise einen Wert im Bereich von 7 bis 15 mm.

Fig. 5 zeigt ein geformtes Blechstück 32 zu einer zweiten Ausführungsform, und Fig. 6 einen Längsschnitt durch das entsprechende Bodenventil 1. Die Leitschenkel 5 tragen an den vertikalen Kanten 51 je einen Widerhaken 6, der eine Oberkante 610 parallel zur Plattenebene und eine überhängend geneigte äussere Seitenfläche 62 aufweist.

Die Leitschenkel 5 können jeweils auch nur einen Widerhaken 6 tragen. Ein solcher ist mit Vorteil in der Mitte zwischen den Kanten 51 angeordnet und relativ breit ausgebildet (nicht dargestellt).

Zur Fertigung des Ventilkörpers 3 ist ein Werkstoff aus einer Vielfalt von Materialarten verwendbar, nämlich folgenden Materialarten: unlegierter Stahl (C-Stahl), niedrig legierte und legierte Stähle, insbesondere rostfreie Stähle (ferritische und austenitische) oder Sonderstähle (z.B. Duplex, Supra), Leichtmetalle (z.B. Titan, Aluminium), hochbeständige Metalle und Legierungen (z.B. mit Zirkonium, Tantal, Kupfer, Zink; insbesondere die Nickelbasis-Legierung Monel) Kunststoffe (z.B. Polypropylen PP, PVDF), keramische Materialien sowie Kohlenstoff und faserverstärkte, insbesondere kohlenstofffaserverstärkte Verbundwerkstoffe. Ob sich die Deckplatte 4 elastisch oder eher plastisch verformt, hängt von der Wahl des Werkstoffs ab.

Bodenkolonne umfassen auf ihren Böden 10 jeweils eine Vielzahl von erfindungsgemässen Bodenventilen 1. In diesen Kolonnen lassen sich die Bodenventile 1 relativ leicht einsetzen: Es wird mit Vorteil jeweils ein erster Leitschenkel 5 in die für den Dampfdurchtritt vorgesehene Öffnung 2 eingeführt. Der zweite Leitschenkel 5 wird mit den geneigten äusseren Seitenflächen 62 der Widerhaken 6 auf den Rand 20 der Öffnung 2 aufgesetzt. Durch Aufbringen einer Kraft auf die Deckplatte 4, beispielsweise eines Kraftstosses mittels eines Schlags oberhalb des zweiten Leitschenkels 5, werden die Widerhaken 6 zu einem Verschwenken in den Innenbereich der Öffnung 2 und die Deckplatte 4 zu einem Aufwölben gezwungen, so dass der zweite Leitschenkel 5 und dessen zwei Widerhaken 6 unter Ausführung einer Schnappbewegung in die Öffnung 2 eindringen. Entsprechendes gilt auch, wenn der Leitschenkel 5 nur einen Widerhaken 6 trägt. Der Ventilkörper 3 lässt sich auch durch beidseitiges Aufsetzen der Widerhaken 6 beider Leitschenkel 5 (vgl. Fig. 8) und Ausüben eines anschliessenden Kraftstosses einsetzen. Dabei ist eine grössere Kraft erforderlich als beim einseitigen Aufsetzen.

Mit einer geeignet ausgebildeten Presseinrichtung können jeweils bei einer Gruppe von benachbarten Bodenventilen 1 die Ventilkörper 3 simultan eingesetzt werden, wobei dies auch ohne Ausüben eines Kraftstosses, also z.B. über eine gleichmässige Hubbewegung, erfolgen kann.

Eine beim Aufwölben der Deckplatte 4 entstehende plastische Verformung in Form eines nach oben konvexen Bogens kann zumindest teilweise rückgängig gemacht werden, ohne dass dazu ein besonderes Werkzeug einzusetzen ist, mit dem von der Bodenuntenseite her auf den Ventilkörper 3 einzuwirken ist. Es genügt ein einfaches Werkzeug, mit dem über dem Boden eine auf einen mittleren Bereich der Deckplatte wirkende Kraft ausgeübt werden kann. Da die Aufwölbung eine Vergrösserung der Durchtrittsöffnung für den Dampfstrom bedeutet, wirkt sich eine kleine Aufwölbung günstig aus und kann daher auch belassen werden.

Die Fig. 7 zeigt eine Deckplatte 4 zu einer dritten Ausführungsform, die kreisförmig ist und in deren Oberfläche Nuten 45 eingelassen sind. Diese Nuten 45 erleichtern die Deformation der Deckplatte 4, die beim Einsetzen in die Bodenöffnung 2 benötigt wird. Dies ist in Fig. 8 illustriert, in der die Aufwölbung mittels Knickstellen bei den Nuten 45 gezeigt ist. Statt der Nuten 45 können auch Schlitze oder Reihen von kleinkalibrigen Bohrungen vorgesehen sein. Die Nut 45 kann durch einen oder eine Mehrzahl von Schlitzen ersetzt sein.

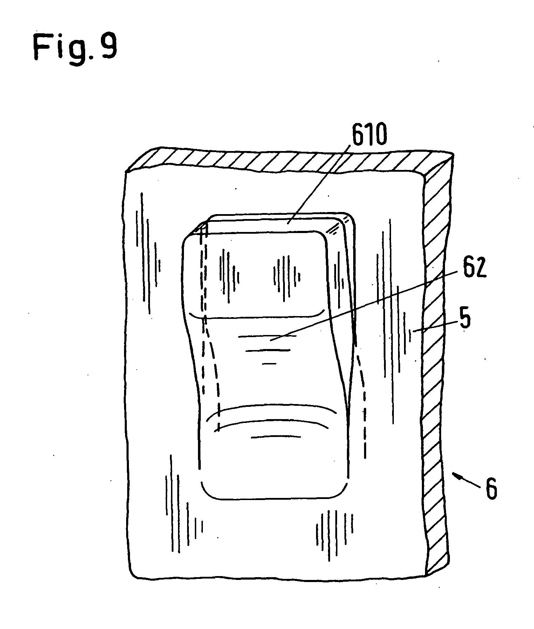

Die Widerhaken 6 können auch durch ein Stanzen und Umformen (in einem Arbeitsschritt) erzeugt werden. Der in der Fig. 9 gezeigte Widerhaken 6 hat eine durch Stanzen erzeugte Oberkante 610 und Prägen geformte äussere Seitenfläche mit überhängend geneigtem mittleren Teil 62. Die Widerhaken 6 der Figuren 5 und 6 können durch Widerhaken 6 gemäss der Fig. 9 ersetzt werden. Es kann auch nur ein solcher Widerhaken 6 in der Mitte des Leitschenkels 5 vorgesehen sein, wobei dieser sich mit Vorteil über einen grossen Bereich der Leitschenkelbreite erstreckt.

## Patentansprüche

1. Bodenventil (1) für eine Bodenkolonne, mit einer Öffnung (2) in einem Boden (10) für einen Dampfdurchtritt, einem Öffnungsrand (20) und einem zum Öffnungsrand passend ausgebildeten Ventilkörper (3), der eine Deckplatte (4) und am Rand dieser Platte angeordnete, vertikal nach unten gerichtete Leitschenkel (5) umfasst, wobei die Leitschenkel Widerhaken (6) zum Verankern des Ventilkörpers am Öffnungsrand aufweisen, der Plattenrand, gegebenenfalls mit Ausnahme von noppenartigen, nach unten gerichteten Erhebungen (40), auf einer Ebene, der Plattenebene, liegt und die äusseren Oberflächen der Leitschenkel jeweils einen Hubbereich (50) enthalten, der senkrecht zur Plattenebene steht,
**dadurch gekennzeichnet, dass** für den Ventilkörper hinsichtlich dessen Einsetzen in die Bodenöffnung (2) Werkstoff sowie Formgebung so gewählt sind, dass sich beim Einsetzen eine elastische und gegebenenfalls teilweise plastische Verformung des Ventilkörpers ergibt, die weitgehend auf die Deckplatte in Form einer Aufwölbung beschränkt ist, und dass eine etwaige Deformation am eingesetzten Ventilkörper durch eine Kraftausübung auf die Deckplatte bis auf eine geringe Restverformung rückgängig machbar ist, wobei auf der Deckplatte Schwächungen, beispielsweise in Form von Nuten, Schlitzen oder Bohrungen, eingelassen sein können, die ein Ausbilden der Aufwölbung beim Einsetzen des Ventilkörpers erleichtern.

2. Bodenventil nach Anspruch 1, **dadurch gekennzeichnet, dass** die Widerhaken (6) an zwei diametral zu einander stehenden Leitschenkeln (5) angeordnet sind, dass jeder Widerhaken laschen- oder zungenartig ausgebildet ist mit a) einer geraden Oberkante (610) oder ebenen oberen Seitenfläche (61), die parallel zur Plattenebene liegen, so dass der Hubbereich (50) gegen oben eindeutig begrenzt ist, und b) einer überhängend geneigten äusseren Seitenfläche (62), wobei die Leitschenkel (5) an oder zwischen vertikalen Kanten (51) jeweils mindestens einen Widerhaken (6) tragen.

3. Bodenventil nach Anspruch 1 oder 2, **dadurch gekennzeichnet, dass** der Öffnungsrand (20) viereckig ist, dass die Deckplatte (4) entsprechend vier gerade, auf einem Viereck liegende Randseiten (41, 42) hat, dass vorzugsweise die Vierecke Rechtecke sind oder Trapeze mit angenähert der Form von Rechtecken, dass die Leitschenkel (5) parallel zu einander sowie zu den kurzen Viereckseiten (21) ausgerichtet sind und dass zwischen den Leitschenkeln und den Öffnungsrändern (21, 22) Spalten (71', 71", 72', 72") vorgesehen sind, wobei bezüglich diesen Spalten gilt, dass vertikale Kanten (51) der Leitschenkel über die Höhe (h) der Hubbereiche (50) und senkrecht zu diesen zwei Rechtecke aufspannen, deren grösste Diagonale (D) kürzer als die Länge (S) der entsprechende Randseite (22) ist und dass die Differenz zwischen der Länge der Randseite und der genannten Diagonale einen Wert grösser als 0.3 mm, vorzugsweise einen Wert von rund 1 mm hat.

4. Bodenventil nach einem der Ansprüche 1 bis 3, **dadurch gekennzeichnet, dass** der Ventilkörper (3) aus einem Blech durch Umformen hergestellt ist, die Deckplatte (4), die Leitschenkel (5) sowie vorzugsweise auch die Widerhaken (6) Teile eines zusammenhängenden Blechstücks (31; 32) sind und das Umformen ein Stanzen des Blechs oder ein Schneiden des Blechs sowie ein plastisches Umformen, insbesondere Biegen oder Prägen des Blechstücks umfasst.

5. Bodenventil nach einem der Ansprüche 1 bis 4, **dadurch gekennzeichnet, dass** zur Fertigung des Ventilkörpers (3) ein Werkstoff aus einer Vielfalt von Materialarten verwendbar ist, nämlich folgenden Materialarten: unlegierte, niedrig legierte und legierte Stähle, insbesondere rostfreie Stähle oder Sonderstähle, Leichtmetalle, hochbeständige Metalle und Legierungen, Kunststoffe, keramische Materialien sowie Kohlenstoff und faserverstärkte, insbesondere kohlenstofffaserverstärkte Verbundwerkstoffe.

6. Bodenventil nach einem der Ansprüche 1 bis 5, **dadurch gekennzeichnet, dass** die Dicke der Deckplatte (4) einen Wert im Bereich von 0.5 bis 3 mm hat, dass die Fläche der Öffnung (2) für den Dampfdurchtritt einen Wert im Bereich von 500 bis 2000 mm² hat, dass die Länge der Widerhaken (6) einen Wert im Bereich von 2 bis 10 mm hat und dass die Höhe (h) des Hubbereichs (50) grösser als 5 und kleiner als 20 mm ist, vorzugsweise einen Wert im Bereich von 7 bis 15 mm hat.

7. Bodenkolonne mit Böden (10), die jeweils eine Vielzahl von Bodenventilen (1) gemäss einem der Ansprüche 1 bis 6 umfassen.

8. Verfahren zum Einsetzen von Ventilkörpern (3) in einer Bodenkolonne gemäss Anspruch 7, **dadurch gekennzeichnet, dass** durch Aufbringen einer Kraft auf die Deckplatte (4), beispielsweise eines Kraftstosses mittels eines Schlags, die Deckplatte zu einem Aufwölben gezwungen wird, so dass die Widerhaken in den Innenbereich der Öffnung verschwenkt werden und die Leitschenkel und deren Widerhaken unter Ausführung einer Schnappbewegung in die Öffnung eindringen, wobei mit Vorteil vor der Krafteinwirkung ein erster Leitschenkel (5) in die für den Dampfdurchtritt vorgesehene Öffnung (2) eingeführt, der zweite Leitschenkel an dessen Widerhaken (6) auf den Rand (20) der Öffnung aufgesetzt und oberhalb des zweiten Leitschenkels mit der Kraft eingewirkt wird.

9. Verfahren nach Anspruch 8, **dadurch gekennzeichnet, dass** mit einer Presseinrichtung jeweils bei einer Gruppe von benachbarten Bodenventilen (1) die Ventilkörper (3) simultan und ohne Ausübung eines Kraftstosses eingesetzt werden.

10. Verfahren nach Anspruch 8 oder 9, **dadurch gekennzeichnet, dass** eine beim Aufwölben der Deckplatte (4) entstehende plastische Verformung in Form eines nach oben konvexen Bogens zumindest teilweise rückgängig gemacht wird, indem mit einem Werkzeug eine auf einen mittleren Bereich der Deckplatte wirkende Kraft ausgeübt wird.

## Claims

1. A tray valve (1) for a tray column, with an opening (2) in a tray (10) for a vapour passage, the opening having a rim (20), and a valve body (3) which is made to match the rim of the opening and includes a top plate (4) and vertically downwardly directed guide limbs (5) at the edge of this plate, with the guide limbs having barbs (6) to anchor the valve body to the rim of the opening, with the plate edge - optionally with the exception of dimple-like, downwardly directed raised portions (40) - lying on one plane, the plate plane, and with the outer surfaces of the guide limbs each containing a stroke region (50) which is perpendicular to the plate plane,
**characterised in that** a material and a shape are selected for the valve body with respect to its insertion into the tray opening (2) such that a resilient deformation, and optionally partly plastic deformation, results on the insertion which is largely limited to the top plate in the form of an upward arching; and **in that** any deformation at the inserted valve body can be reversed, with the exception of a slight residual deformation, by an application of force onto the top plate, with weakened portions, for example in the form of grooves, slits or bores, being able to be provided in the top plate which facilitate a formation of the upward arching on the insertion of the valve body.

2. A tray valve in accordance with claim 1, **characterised in that** the barbs (6) are arranged at two guide limbs (5) diametrically opposite to one another; that each barb is made in the manner of a tab or tongue with a) a straight upper edge (610) or a planar upper side surface (61) which lie parallel to the plate plane such that the stroke region (50) is clearly upwardly bounded and b) an outer side surface (62) with a projecting incline,
wherein the guide limbs (5) each bear at least one barb (6) at or between vertical edges (51).

3. A tray valve in accordance with claim 1 or claim 2, **characterised in that** the rim (20) of the opening is quadrangular; **in that** the top plate (4) correspondingly has four straight edge sides (41, 42) lying on a quadrangle; **in that** the quadrangles are preferably rectangles or are trapeziums with approximately the shape of rectangles; **in that** the guide limbs (5) are aligned parallel to one another and to the short quadrangle sides (21); and **in that** gaps (71', 71", 72', 72") are provided between the guide limbs and the rims (21, 22) of the opening, and the vertical edges (51) of the guide limbs spanning, with respect to these gaps, two rectangles over the height (h) of the stroke regions (50) and perpendicular thereto, the largest diagonal (D) of said two rectangles being shorter than the length (S) of the corresponding rim side (22); and **in that** the difference between the length of the rim side and the said diagonal has a value larger than 0.3 mm, preferably a value of around 1 mm.

4. A tray valve in accordance with any one of the claims 1 to 3, **characterised in that** the valve body (3) is made from a metal sheet by shaping; the top plate (4), the guide limbs (5) and preferably all the barbs (6) are parts of a contiguous piece of sheet metal (31; 32) and the shaping includes a stamping of the sheet metal or a cutting of the sheet metal and a plastic shaping, in particular bending or punching of the piece of sheet metal.

5. A tray valve in accordance with any one of the claims 1 to 4, **characterised in that** a material can be used from a plurality of material types for the production of the valve body (3), namely the following material types: unalloyed steel, low alloyed and alloyed steels, in particular stainless steels or special steels, light metals, high-resistance metals and alloys, plastics, ceramic materials as well as carbon and fibre reinforced composite materials, in particular carbon fibre reinforced composite materials.

6. A tray valve in accordance with any one of the claims 1 to 5, **characterised in that** the thickness of the top plate (4) has a value in the range from 0.5 to 3 mm; **in that** the area of the opening (2) for the vapour passage has a value in the range from 500 to 2000 mm²; **in that** the length of the barbs (6) has a value in the range from 2 to 10 mm; and **in that** the height (h) of the stroke region (50) is larger than 5 and smaller than 20 mm, preferably having a value in the range from 7 to 15 mm.

7. A tray column having trays (10) which each include a plurality of tray valves (1) in accordance with any one of the claims 1 to 6.

8. A method for the insertion of valve bodies (3) into a tray column in accordance with claim 7, **characterised in that** the top plate is forced to form an upward arching by application of a force onto the top plate (4), for example of a force impact by means of a blow, such that the barbs are pivoted into the inner region of the opening and the guide limbs and their barbs penetrate into the opening while carrying out a snap-in movement,
wherein a first guide limb (5) is advantageously introduced into the opening (2) provided for the vapour passage before the force effect, the second guide limb is set at its barb (6) onto the rim (20) of the opening and is acted on by the force above the second guide limb.

9. A method in accordance with claim 8, **characterised in that** the valve bodies (3) are inserted simultaneously and without exerting a force impact using a pressing device with a respective group of adjacent tray valves (1).

10. A method in accordance with claim 8 or claim 9, **characterised in that** plastic deformation created on the upward arching of the top plate (4) in the form of an upwardly convex arch is reversed at least in part **in that** a force acting on a middle region of the top plate is exerted using a tool.

## Revendications

1. Soupape de plateau (1) pour une colonne à plateaux, avec une ouverture (2) dans un plateau (10) pour un passage de vapeur, un bord d'ouverture (20) et un corps de soupape (3) réalisé d'une manière correspondante au bord d'ouverture, qui comprend une plaque de recouvrement (4) et des branches de guidage (5) disposées au bord de cette plaque, dirigées verticalement vers le bas, où les branches de guidage présentent des barbes (6) pour l'ancrage du corps de soupape au bord d'ouverture, le bord de plaque, le cas échéant à l'exception de surélévations (40) en forme de bosse, dirigées vers le bas, se situe sur un plan, le plan de plaque, et les surfaces extérieures des branches de guidage comprennent chacune une zone de levage (50) qui s'étend perpendiculairement au plan de plaque,
**caractérisée en ce que** pour le corps de soupape, en vue de son insertion dans l'ouverture de plateau (2), le matériau et la configuration sont sélectionnés de façon que lors de l'insertion se produit une déformation élastique et le cas échéant partiellement plastique du corps de soupape qui est limitée dans une grande mesure à la plaque de recouvrement sous la forme d'un bombement, et **en ce qu'**une déformation éventuelle au corps de soupape inséré peut être corrigée, à part une petite déformation résiduelle, en exerçant une force sur la plaque de recouvrement, où peuvent être réalisés sur la plaque de recouvrement des affaiblissements, par exemple sous la forme de rainures, fentes ou perçages qui facilitent une formation du bombement lors de la mise en place du corps de soupape.

2. Soupape de plateau selon la revendication 1, **caractérisée en ce que** les barbes (6) sont disposées à deux branches de guidage (5) s'étendant diamétralement l'une à l'autre, **en ce que** chaque barbe est réalisée en forme de languette avec a) une arête supérieure rectiligne (610) ou une face latérale supérieure plane (61), qui se situent parallèlement au plan de plaque de sorte que la zone de levage (50) est clairement délimitée vers le haut, et b) une face latérale extérieure inclinée en surplomb (62), où les branches de guidage (5) portent à ou entre des arêtes verticales (51) respectivement au moins une barbe (6).

3. Soupape de plateau selon la revendication 1 ou 2, **caractérisée en ce que** le bord d'ouverture (20) est carré, **en ce que** la plaque de recouvrement (4) présente d'une manière correspondante quatre côtés de bord rectilignes (41, 42) situés sur un carré, **en ce que** de préférence les carrés sont des rectangles ou des trapèzes approximativement de la forme de rectangles, **en ce que** les branches de guidage (5) sont orientées parallèlement l'une à l'autre et aux côtés carrés courts (21) et **en ce que** sont prévues entre les branches de guidage et les bords d'ouverture (21, 22) des fentes (71', 71", 72', 72"), et il vaut pour ces fentes que des arêtes verticales (51) des branches de guidage forment sur la hauteur (h) des zones de levage (50) et perpendiculairement à celles-ci deux rectangles dont la diagonale la plus grande (D) est plus courte que la longueur (S) du côté de bord correspondant (22), et **en ce que** la différence entre la longueur du côté de bord et la diagonale indiquée possède une valeur supérieure à 0,3 mm, de préférence une valeur d'environ 1 mm.

4. Soupape de plateau selon l'une des revendications 1 à 3, **caractérisée en ce que** le corps de soupape (3) est réalisé à partir d'une tôle par déformation, la plaque de recouvrement (4), les branches de guidage (5) ainsi que de préférence également les barbes (6) font partie d'une pièce de tôle continue (31; 32), et la déformation comprend un découpage de la tôle ou une coupe de la tôle ainsi qu'une déformation plastique, en particulier un pliage ou estampage de la pièce de tôle.

5. Soupape de plateau selon l'une des revendications 1 à 4, **caractérisée en ce que** pour la fabrication du corps de soupape (3), un matériau d'une multitude de types de matériau peut être utilisé, à savoir les types de matériau suivants: des aciers non-alliés, faiblement alliés et alliés, en particulier des aciers inoxydables ou bien des aciers spéciaux, des métaux légers, des métaux et des alliages hautement résistants, des matériaux synthétiques, des matériaux céramiques et du carbone et des matériaux composites renforcés par des fibres, en particulier renforcés par des fibres de carbone.

6. Soupape de plateau selon l'une des revendications 1 à 5, **caractérisée en ce que** l'épaisseur de la plaque de recouvrement (4) possède une valeur dans la plage de 0,5 à 3 mm, **en ce que** la face de l'ouverture (2) pour le passage de la vapeur a une valeur dans la plage de 500 à 2000 mm², **en ce que** la longueur des barbes (6) a une valeur dans la plage de 2 à 10 mm, et **en ce que** la hauteur (h) de la zone de levage (50) est plus grande que 5 et plus petite que 20 mm, et qu'elle a de préférence une valeur dans la plage de 7 à 15 mm.

7. Colonne à plateaux avec des plateaux (10) qui comprennent chacun une multitude de soupapes de plateau (1) selon l'une des revendications 1 à 6.

8. Procédé pour insérer des corps de soupape (3) dans une colonne à plateaux selon la revendication 7, **caractérisé en ce que** par l'application d'une force à la plaque de recouvrement (4), par exemple une impulsion par un coup, la plaque de recouvrement est contrainte à se bomber de sorte que les barbes sont pivotées dans la zone intérieure de l'ouverture et les branches de guidage et leurs barbes, en exécutant un mouvement d'encliquetage, pénètrent dans l'ouverture, où avantageusement, avant d'exercer une force, une première branche de guidage (5) est insérée dans l'ouverture (2) prévue pour le passage de la vapeur, la deuxième branche de guidage est placée à sa barbe (6) sur le bord (20) de l'ouverture et au-dessus de la deuxième branche de guidage, une force est exercée.

9. Procédé selon la revendication 8, **caractérisé en ce qu'**au moyen d'une installation de pression, respectivement dans un groupe de soupapes de plateau avoisinantes (1), les corps de soupape (3) sont insérés simultanément et sans exercer d'impulsion.

10. Procédé selon 1a revendication 8 ou 9, **caractérisé en ce qu'**une déformation plastique produite lors du bombement de la plaque de recouvrement (4) sous la forme d'un arc convexe vers 1e haut est au moins partiellement corrigée en exerçant avec un outil une force agissant sur une zone médiane de la plaque de recouvrement.
